# EUROPÄISCHE PATENTANMELDUNG

(11) **EP 2 921 715 A1**
(43) Veröffentlichungstag der Anmeldung: **23.09.2015**
(21) Anmeldenummer: 15158429.9
(22) Anmeldetag: 10.03.2015
(51) Int. Cl.: F04D 29/54, F01D 5/14, F01D 9/04, F01D 25/24, F04D 29/64

(54) **SCHAUFELREIHENGRUPPE**

(30) Priorität: 20.03.2014 DE 102014205228
(71) Anmelder: Rolls-Royce Deutschland Ltd & Co KG, 15827 Blankenfelde-Mahlow (DE)
(72) Erfinder: Dr. Gümmer, Volker, 15831 Mahlow (DE)
(74) Vertreter: Maikowski & Ninnemann

(57) **Zusammenfassung**

Die Erfindung betrifft eine Schaufelreihengruppe, die in einem Hauptströmungspfad einer Strömungsmaschine anordbar ist und aus N benachbarten und relativ zueinander fest angeordneten Mitgliedsschaufelreihen besteht. Dabei sind in der durch die Axialrichtung (x) und die Radialrichtung (r) gebildeten Meridionalebene eine vordere Mitgliedsschaufelreihe mit vorderen Schaufeln sowie eine hintere Mitgliedsschaufelreihe mit hinteren Schaufeln gegeben und weist die Schaufelreihengruppe zwei Hauptströmungspfadberandungen (HB). Es ist vorgesehen, dass das Schaufelprofil der Schaufeln (i, i+1) der Mitgliedsschaufelreihen an wenigstens einer der beiden Hauptströmungspfadberandungen (HB) fest mit einer Schaufelfußkonstruktion verbunden ist, wobei die Schaufelfußkonstruktion der Schaufeln (i) der vorderen Mitgliedschaufelreihe mindestens eine Haltestruktur (VF(i), HF(i)) und/oder die Schaufelfußkonstruktion der Schaufeln (i+1) der hinteren Mitgliedschaufelreihe mindestens eine Haltestruktur (VF(i+1), HF(i+1)) aufweist und mindestens eine der Haltestrukturen (VF(i), HF(i), VF(i+1), HF(i+1)) dazu ausgebildet und geeignet ist, aufgrund ihrer Formgebung die jeweilige Schaufelfußkonstruktion (F(i), F(i+1)) der Mitgliedschaufelreihe in wenigstens einer Richtung innerhalb der umgebenden Struktur der betreffenden Hauptströmungspfadberandung zu fixieren.

## Beschreibung

Die Erfindung betrifft eine Schaufelreihengruppe gemäß dem Oberbegriff des Anspruchs 1. Insbesondere betrifft die Erfindung eine Stator-Schaufelreihengruppe.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Eine derartige Strömungsmaschine ist beispielsweise aus der EP 2 261 463 A2 bekannt.

In jedem Fall ergibt sich in Schaufelgruppenanordnungen wegen der beabsichtigten axial engen Beabstandung der Mitgliedschaufelreihen die Problematik, dass die Fixierung der beteiligten Schaufeln an der Nabe und im Gehäuse konstruktiv schwer zu realisieren ist, so dass neuartige Lösungen erforderlich sind, um eine kompakte Bauweise der Maschine zu erreichen. Dies gilt insbesondere für Statorschaufelreihengruppen.

Der vorliegenden Erfindung liegt die Aufgabe zu Grunde, eine Schaufelreihengruppe bereitzustellen, die eine konstruktiv einfache Realisierung der Fixierung der Schaufeln der Schaufelreihengruppe an mindestens einer der Hauptströmungspfadberandungen ermöglicht.

Diese Aufgabe wird erfindungsgemäß durch eine Schaufelreihengruppe mit den Merkmalen des Anspruchs 1 gelöst. Ausgestaltungen der Erfindung sind in den Unteransprüchen angegeben.

Danach stellt die erfindungsgemäße Lösung eine Schaufelreihengruppe bereit, die in einem Hauptströmungspfad einer Strömungsmaschine anordbar ist und aus N benachbarten und sowohl in Axialrichtung als auch in Umfangsrichtung relativ zueinander fest angeordneten Mitgliedsschaufelreihen besteht. Dabei sind eine vordere Mitgliedsschaufelreihe mit vorderen Schaufeln mit Vorderkante und Hinterkante sowie eine hintere Mitgliedsschaufelreihe mit hinteren Schaufeln mit Vorderkante und Hinterkante gegeben und weist die Schaufelreihengruppe zwei Hauptströmungspfadberandungen auf.

Es ist erfindungsgemäß vorgesehen, dass das Schaufelprofil der Schaufeln der Mitgliedsschaufelreihen an wenigstens einer der beiden Hauptströmungspfadberandungen fest mit einer Schaufelfußkonstruktion verbunden ist, wobei die Schaufelfußkonstruktion der Schaufeln der vorderen Mitgliedschaufelreihe mindestens eine Haltestruktur und/oder die Schaufelfußkonstruktion der Schaufeln der hinteren Mitgliedschaufelreihe mindestens eine Haltestruktur aufweist und mindestens eine der Haltestrukturen dazu ausgebildet und geeignet ist, aufgrund ihrer Formgebung die jeweilige Schaufelfußkonstruktion der Mitgliedschaufelreihe in wenigstens einer Richtung innerhalb der umgebenden Struktur der betreffenden Hauptströmungspfadberandung zu fixieren. Dadurch ist die Schaufelfußkonstruktion in der umgebenden Struktur der betreffenden Hauptströmungspfadberandung fest angeordnet.

Die Haltestruktur ist beispielsweise durch eine längliche Struktur, z.B. einen Haltefinger gebildet. Es kann dabei vorgesehen sein, dass die Haltestruktur als eine von der sonstigen Schaufelfußkonstruktion abstehende Struktur gebildet ist, beispielsweise als eine von einer Basis der Schaufelfußkonstruktion abstehende Struktur. Ein Abstehen erfolgt beispielweise in axialer Richtung oder entgegen der axialen Richtung.

Die erfindungsgemäße Lösung ermöglicht die Bereitstellung einer Schaufelreihengruppe, bei der die Schaufeln der Schaufelreihengruppe an mindestens einer der Hauptströmungspfadberandungen in konstruktiv einfacher Weise befestigt werden, indem die Schaufelfußkonstruktionen zusätzlich eine Haltestruktur ausbilden, die es ermöglicht, dass die jeweilige Schaufelfußkonstruktion in der umgebenden Struktur der betreffenden Hauptströmungspfadberandung fest angeordnet und in wenigstens einer Richtung fixiert ist.

Gemäß einer Ausgestaltung der Erfindung ist die Haltestruktur einer Schaufelfußkonstruktion als eine zumindest im Meridionalebenenschnitt länglich geformte Haltestruktur ausgebildet. Beispielsweise wird die längliche Haltestruktur durch eine Struktur gebildet, die zumindest im Meridionalebenenschnitt die Form eines Haltefingers aufweist. Dieser kann gerade oder gebogen ausgebildet sein. Eine längliche Form oder die Form eines Haltefingers kann dabei in Ausführungsbeispielen der Erfindung, in denen die Haltestruktur sich nicht substanziell in Umfangsrichtung erstreckt, auch die dreidimensionale Form der Haltestruktur darstellen. Jedoch wird darauf hingewiesen, dass die Haltestruktur auch eine andere Form als eine längliche Form aufweisen kann und z.B. alternativ als kurzer Haltestummel ausgebildet sein kann.

Des Weiteren kann vorgesehen sein, dass die Haltestruktur von einer Basis der Schaufelfußkonstruktion absteht. Dabei kann vorgesehen sein, dass die Haltestruktur und die Basis einteilig ausgebildet sind.

Die Schaufelfußkonstruktion kann einen einzelnen Schaufelfuß oder ein über mehrere Schaufeln einer Statorschaufelreihe gehendes Schaufelfuß-Ringsegment oder einen über alle Schaufeln einer Statorschaufelreihe gehenden Schaufelfuß-Vollring aufweisen.

Gemäß einer Ausgestaltung der Erfindung ist die Haltestruktur formschlüssig in der umgebenden Struktur angeordnet, wobei der Formschluss mindestens eine Bewegungsrichtung der Haltestruktur gegenüber der umgebenden Struktur sperrt.

Eine weitere Ausgestaltung sieht vor, dass die Basen zweier benachbarter Schaufelfußkonstruktionen unterschiedlicher Schaufelreihen über wenigstens einen Teil des Umfangs der Strömungsmaschine direkt an oder nahe der Hauptströmungspfadberandung aneinandergrenzen.

Gemäß einer Ausgestaltung der Erfindung ist ein Kontakt der Schaufelfußkonstruktionen zweier benachbarter Mitgliedschaufelreihen entlang einer von der Hauptströmungspfadberandung ausgehenden, schräg oder quer zur Hauptströmungsrichtung orientierten Linie vorgesehen.

Eine weitere Ausgestaltung der Erfindung sieht vor, dass eine vordere Haltestruktur einer vorderen Schaufelfußkonstruktion nicht direkt am vorderen Rand der Schaufelfußkonstruktion sondern stromabwärts entfernt vom vorderen Rand der Schaufelfußkonstruktion der vorderen Reihe vorgesehen ist. Auch kann vorgesehen sein, dass eine hintere Haltestruktur einer hinteren Schaufelfußkonstruktion nicht direkt am hinteren Rand der Schaufelfußkonstruktion sondern stromaufwärts entfernt vom hinteren Rand der Schaufelfußkonstruktion der hinteren Reihe vorgesehen ist.

Eine weitere Ausgestaltung der Erfindung sieht vor, dass die Schaufeln der Mitgliedschaufelreihen separat in der umgebenden Struktur verankert sind, wobei keine der Haltestrukturen einer Mitgliedschaufelreihe in einer Schaufelfußkonstruktion der jeweils anderen Mitgliedschaufelreihe verankert ist. Hierzu kann vorgesehen sein, dass in der umgebenden Struktur im Bereich einer hinteren Haltestruktur der vorderen Mitgliedschaufelreihe und einer vorderen Haltestruktur der hinteren der vorderen Mitgliedschaufelreihe eine im Wesentlichen oder exakt T-förmige Halterung ausgebildet ist.

Eine weitere Ausgestaltung der Erfindung sieht vor, dass eine hintere Haltestruktur der vorderen Mitgliedschaufelreihe und eine vordere Haltestruktur der hinteren Mitgliedschaufelreihe gemeinsam in einer Ausnehmung in der umgebenden Struktur verankert sind, wobei die beiden Haltestrukturen voneinander weg weisen. Hierbei kann vorgesehen sein, dass die Schaufelfußkonstruktionen der beiden Mitgliedschaufelreihen in wenigstens einer Meridionalebene entlang einer quer oder schräg zur Hauptströmungsrichtung orientierten Linie Rücken an Rücken aneinander liegen und sich auf diese Weise gegen einander abstützen.

Eine weitere Ausgestaltung der Erfindung sieht vor, dass wenigstens eine der Schaufelfußkonstruktionen der Mitgliedschaufelreihen zwei Haltestrukturen, eine vordere Haltestruktur und eine hintere Haltestruktur umfasst. Dabei können die zwei Haltestrukturen einer Schaufelfußkonstruktion aufeinander zu zeigen. Für diesen Fall kann vorgesehen sein, dass in der umgebenden Struktur im Bereich zwischen den Haltestrukturen eine im Wesentlichen oder exakt T-förmige Halterung ausgebildet ist. Eine weitere Ausgestaltung der Erfindung sieht vor, dass zwischen Oberflächen einer Schaufelfußkonstruktion und der umgebenden Struktur wenigstens eine Verschleißschutzhülse vorgesehen ist. Diese kann von dünner Wandstärke sein, wobei der Aufbau der Konstruktion nicht konzeptionell verändert wird. Dabei ist der Umstand des Aneinandergrenzens bzw. des Berührens einer Schaufelfußkonstruktion und der umgebenden Struktur als gleichbedeutend anzusehen mit dem Umstand des Aneinandergrenzen bzw. Berührens über eine zwischenliegende Verschleißschutzhülse.

Eine weitere Ausgestaltung der Erfindung sieht vor, dass die Haltestruktur von einer Basis der Schaufelfußkonstruktion absteht. Dabei kann vorgesehen sein, dass die Haltestruktur und die Basis einteilig ausgebildet sind.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit festem oder freiem Schaufelende mit Spalt ausgeführt sein können.

Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinander folgenden Rotoren. Schließlich kann die Strömungsmaschine alternativ eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung sieht in einer vorteilhaften Ausgestaltung vor, dass die benachbarten und sowohl in Axialrichtung als auch in Umfangsrichtung relativ zueinander fest angeordneten Mitgliedschaufelreihen der Schaufelreihengruppe Bestandteile genau einer Verdichterstufe oder genau einer Turbinenstufe sind. Die einzelnen Mitgliedschaufelreihen einer betrachteten Schaufelreihengruppe sind dementsprechend nicht Bestandteile unterschiedlicher funktioneller Teile der Strömungsmaschine. Insbesondere wird unter einer Schaufelreihengruppe im Sinne der vorliegenden Erfindung keine Anordnung verstanden, bei der eine Mitgliedschaufelreihe Bestandteil einer Verdichterstufe ist und eine dazu benachbarte Mitgliedschaufelreihe eine Nachleitschaufelreihe bildet.

Die Erfindung wird nachfolgend unter Bezugnahme auf die Figuren der Zeichnung anhand mehrerer Ausführungsbeispiele näher erläutert. Es zeigen:
- Fig. 1:: eine Konstruktion eines Strömungskanals einer Strömungsmaschine nach dem Stand der Technik,
- Fig. 2a:: eine erfindungsgemäße Statorbaugruppe mit Fronteingriff am Schaufelfuß,
- Fig. 2b:: eine erfindungsgemäße Anordnung zweier Mitgliedschaufelreihen (Umfangsbetrachtung im Schnitt A-A aus Fig.2a),
- Fig. 2c:: eine erfindungsgemäße Anordnung zweier Mitgliedschaufelreihen (Umfangsbetrachtung im Schnitt A-A aus Fig.2a),
- Fig. 2d:: eine erfindungsgemäße Anordnung zweier Mitgliedschaufelreihen (Umfangsbetrachtung im Schnitt A-A aus Fig.2a),
- Fig. 2e:: eine erfindungsgemäße Anordnung zweier Mitgliedschaufelreihen (Umfangsbetrachtung im Schnitt A-A aus Fig.2a),
- Fig. 2f:: eine erfindungsgemäße Anordnung zweier Mitgliedschaufelreihen (Umfangsbetrachtung im Schnitt A-A aus Fig.2a),
- Fig. 3:: eine weitere erfindungsgemäße Statorbaugruppe mit Rückseiteneingriff am Schaufelfuß,
- Fig. 4:: eine weitere erfindungsgemäße Statorbaugruppe mit Frontaufnahme am Schaufelfuß,
- Fig. 5:: eine weitere erfindungsgemäße Statorbaugruppe mit Frontaufnahme am Schaufelfuß,
- Fig. 6:: eine weitere erfindungsgemäße Statorbaugruppe mit rückwärtiger Aufnahme am Schaufelfuß,
- Fig. 7:: eine weitere erfindungsgemäße Statorbaugruppe mit separater Aufnahme am Schaufelfuß,
- Fig. 8:: eine weitere erfindungsgemäße Statorbaugruppe mit gemeinsamer Aufnahme am Schaufelfuß,
- Fig. 9:: eine weitere erfindungsgemäße Statorbaugruppe mit gemeinsamer Aufnahme am Schaufelfuß,
- Fig. 10:: eine weitere erfindungsgemäße Statorbaugruppe mit gemeinsamer Aufnahme am Schaufelfuß,
- Fig. 11:: eine weitere erfindungsgemäße Statorbaugruppe mit Klammerbauteil am Schaufelfuß,
- Fig. 12a:: eine weitere erfindungsgemäße Statorbaugruppe mit Schweiß-/Lötverbindung am Schaufelfuß,
- Fig. 12b:: eine weitere erfindungsgemäße Statorbaugruppe mit gemeinsamem Schaufelfuß,
- Fig. 13:: eine weitere erfindungsgemäße Statorbaugruppe mit Schaufelfuß in Flanschnähe, und
- Fig. 14:: eine weitere erfindungsgemäße Statorbaugruppe mit Innendeckband.

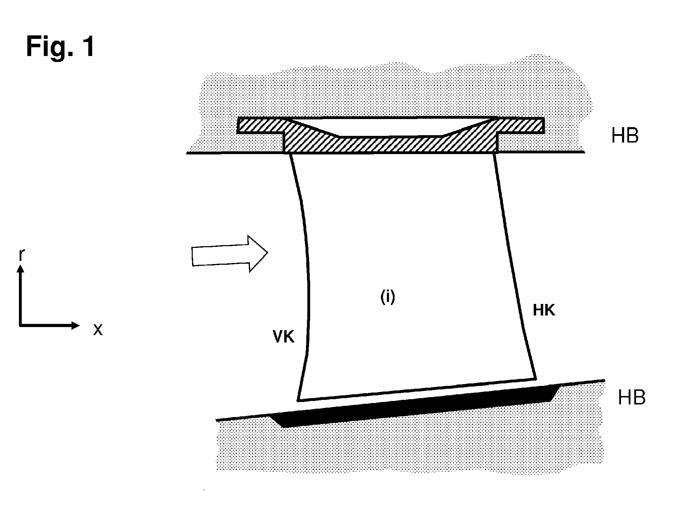

Die Fig. 1 zeigt in der durch die Axialrichtung x und die Radialrichtung r gebildeten Meridionalebene den Abschnitt einer Strömungsmaschine mit einer Statorschaufelreihe mit Schaufeln (i) nach dem Stand der Technik. Die Statorschaufelreihe ist in einem Hauptströmungspfad der Strömungsmaschine angeordnet, der von zwei Hauptströmungspfadberandungen HB begrenzt wird. Die Schaufeln (i) sind üblicherweise an einem Schaufelende in einer die eine Hauptströmungspfadberandung HB bildenden Struktur mittels eines Schaufelfußes gehalten. Das andere Schaufelende ist wie dargestellt als freies Schaufelende ausgebildet oder alternativ mit einer Deckbandanordnung verbunden. Weitere Statorreihen der Strömungsmaschine sind mit einiger Entfernung voneinander ähnlich befestigt. Die Strömung erfolgt hier wie eingezeichnet von links nach rechts und passiert entsprechend zunächst die Schaufelvorderkante VK und dann die Schaufelhinterkante HK.

Eine besondere, vom Stand der Technik abweichende bauliche Anforderung kommt hinzu, wenn Mitgliedschaufelreihen einer Schaufelreihengruppe möglichst eng in Strömungsrichtung der Maschine hintereinander angeordnet werden sollen, so beispielsweise in einer Statorschaufelreihengruppe, welche aus mindestens zwei gleichartigen und ihre relative Anordnung zueinander (sowohl in Umfangsrichtung als auch in Meridionalrichtung) nicht ändernden direkt benachbarten Mitgliedsschaufelreihen besteht.

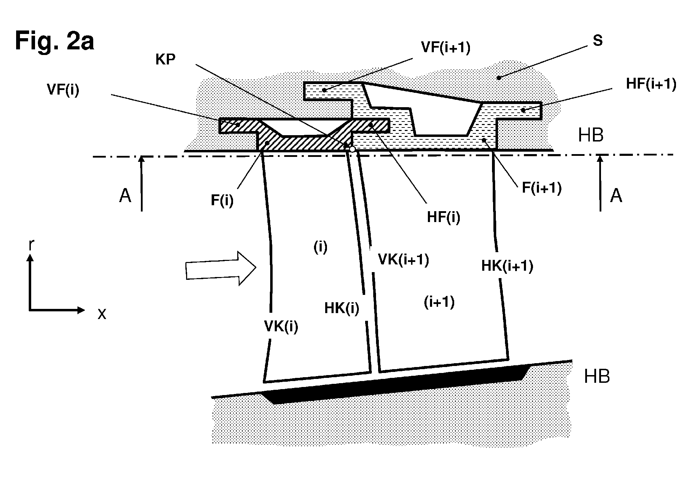

Die Fig. 2a zeigt in einer durch die Axialrichtung x und die Radialrichtung r gebildeten Meridionalebene eine erfindungsgemäße Statorschaufelreihengruppe bestehend aus zwei direkt benachbarten Statorschaufelreihen (i) und (i+1).

Die Vorder- und Hinterkanten der Schaufeln der vorderen Reihe (i) sind mit VK(i) und HK(i) gekennzeichnet, die Vorder- und Hinterkanten der Schaufeln der hinteren Reihe (i+1) sind mit VK(i+1) und HK(i+1) gekennzeichnet.

Es wird darauf hingewiesen, dass zu Zwecken einer übersichtlichen Darstellung in der Fig. 2a und auch den anderen Figuren zwischen der Bezeichnung der Mitgliedsschaufelreihen (i) und (i+1) und der Bezeichnung der einzelnen Mitglieder bzw. Schaufeln der Mitgliedsschaufelreihen nicht unterschieden wird, d.h. die Mitglieder bzw. Schaufeln der Schaufelreihen sind ebenfalls mit (i) und (i+1) bezeichnet.

Das Schaufelprofil stellt den aerodynamisch relevanten Bestandteil einer Schaufel dar, der von Gas umströmt wird (anders als z.B. ein Schaufelfuß). Auch zwischen der Bezeichnung des Schaufelprofils und der Bezeichnung der jeweiligen Schaufel wird in den Figuren zu Zwecken einer übersichtlichen Darstellung nicht unterschieden.

Ebenfalls erfindungsgemäß ist eine Konfiguration aus mehr als zwei Mitgliedschaufelreihen, beispielsweise drei Mitgliedschaufelreihen. Die zwei dargestellten Mitgliedschaufelreihen können erfindungsgemäß also gleichermaßen zwei Mitgliedschaufelreihen aus einem Verband von drei oder mehr Mitgliedschaufelreihen bilden.

Die beiden dargestellten Schaufelreihenmitglieder (i) und (i+1) besitzen eine feste Verbindung zwischen wenigstens einem Schaufelende und der die Hauptströmungspfadberandung HB bildenden Struktur S (festes Schaufelende). An der die Hauptströmungspfadberandung HB bildenden Struktur S, d.h. dem Gehäuse ist eine entsprechende Befestigung vorgesehen. Es kann aber alternativ auch eine entsprechende Befestigung an der Nabe vorgesehen sein. In beiden Fällen kann das andere Schaufelende wie dargestellt als freies Schaufelende oder mit Deckband oder ebenfalls in der Struktur befestigt vorgesehen sein.

Im Bereich der Befestigung der beiden Mitgliedschaufelreihen (in der Fig. 2a im Bereich der Befestigung im Gehäuse) sind die den Mitgliedschaufelreihen zugehörigen Schaufelprofile jeweils mit einer Basis F(i), F(i+1) verbunden, wobei die Basis F(i), F(i+1) einem einzelnen Schaufelfuß, einem über mehrere Schaufeln einer Statorschaufelreihe gehenden Schaufelfuß-Ringsegment oder einem über alle Schaufeln einer Statorschaufelreihe gehenden Schaufelfuß-Vollring zugehörig sein kann. In wenigstens einer durch die Axialrichtung x und die Radialrichtung r gebildeten Meridionalebene grenzen die Basen zweier benachbarter Mitgliedschaufelreihen (i) und (i+1) in wenigstens einem Kontaktpunkt KP oder einer Kontaktlinie direkt an oder nahe der Hauptströmungspfadberandung aneinander.

Dabei kann vorgesehen sein, dass ein Kontakt zweier benachbarter Mitgliedschaufelreihen (i) und (i+1) entlang einer von der Hauptströmungspfadberandung ausgehenden, schräg oder quer zur Hauptströmungsrichtung orientierten Linie erfolgt.

Es kann vorgesehen sein, dass die Basen F(i), F(i+1) zweier benachbarter Mitgliedschaufelreihen (i) und (i+1) nicht nur in einer Meridionalebene (r, x), sondern entlang wenigstens eines Abschnittes des Umfangs der Strömungsmaschine aneinandergrenzen.

Die jeweilige Basis F(i), F(i+1) ist Bestandteil einer Schaufelfußkonstruktion. Die Schaufelfußkonstruktion umfasst zumindest die Basis F(i), F(i+1) und mindestens eine Haltestruktur, wie noch ausgeführt werden wird. Die Schaufelfußkonstruktion kann weitere konstruktive Elemente aufweisen. Weiter kann vorgesehen sein, dass die Basis F(i), F(i+1) und die mindestens eine Haltestruktur einteilig ausgebildet sind.

Zu Zwecken einer übersichtlichen Darstellung wird in der Fig. 2a und auch den anderen Figuren zwischen der Bezeichnung einer Basis F(i), F(i+1) und der Bezeichnung der Schaufelfußkonstruktion, die die Basis F(i), F(i+1) umfasst, nicht unterschieden, d.h. die Schaufelfußkonstruktion wird ebenfalls mit F(i) und F(i+1) bezeichnet.

Die Haltestruktur einer Schaufelfußkonstruktion F(i), F(i+1) wird im Folgenden beispielhaft anhand eines zumindest im Meridionalebenenschnitt länglich ausgebildeten (geraden oder gebogenen) Haltefingers beschrieben. Diese Beschreibung steht beispielhaft für alternative Ausgestaltungen, in denen die Haltestruktur in anderer Weise ausgebildet ist, beispielsweise als kurzer Fixierungsstummel.

Die Basis F(i) der Schaufeln der vorderen Mitgliedschaufelreihe (i) ist der dem Hauptströmungspfad am nächsten liegende Bestandteil der Schaufelfußkonstruktion der vorderen Mitgliedschaufelreihe (i). Die Basis der Schaufeln der hinteren Mitgliedschaufelreihe (i+1) ist der dem Hauptströmungspfad am nächsten liegende Bestandteil der Schaufelfußkonstruktion der hinteren Mitgliedschaufelreihe (i+1).

Die Schaufelfußkonstruktionen der Mitgliedschaufelreihen (i) und (i+1) besitzen jeweils mindestens einen in der umgebenden Struktur S verankerten Haltefinger, einen vorderen Haltefinger VF(i) der vorderen Reihe (i) und einen hinteren Haltefinger HF(i+1) der hinteren Reihe (i+1). Dabei ist vorgesehen, dass jeder der Haltefinger aufgrund seiner Formgebung die jeweilige Schaufelfußkonstruktion der Mitgliedschaufelreihe (i) bzw. (i+1) in wenigstens einer Richtung innerhalb der umgebenden Struktur, die die Hauptströmungspfadberandung HB bildet, fixiert.

Dabei kann vorgesehen sein, dass, wie in der Fig. 2a dargestellt, die Schaufelfußkonstruktion der vorderen Mitgliedschaufelreihe (i) zwei Haltefinger, nämlich einen vorderen Haltefinger VF(i) und einen hinteren Haltefinger HF(i) umfasst, die gemeinsam für einen festen Sitz der Mitgliedschaufelreihe (i) in der umgebenden Struktur S und/oder an der Schaufelfußkonstruktion der benachbarten hinteren Schaufel (i+1) sorgen.

Es kann des Weiteren vorgesehen sein, dass die Schaufelfußkonstruktion der hinteren Mitgliedschaufelreihe (i+1) zwei Haltefinger, nämlich einen vorderen Haltefinger VF(i+1) und einen hinteren Haltefinger HF(i+1), umfasst, die gemeinsam für einen festen Sitz der Mitgliedschaufelreihe (i+1) in der umgebenden Struktur und/oder an der Schaufelfußkonstruktion der benachbarten vorderen Schaufel (i) sorgen.

Dabei kann es bezüglich des erforderlichen Bauraums vorteilhaft sein, dass ein hinterer Haltefinger HF(i) der vorderen Mitgliedschaufelreihe (i) in der Schaufelfußkonstruktion der hinteren Mitgliedschaufelreihe (i+1) verankert ist. Weiter kann vorgesehen sein, dass ein vorderer Haltefinger VF(i+1) der hinteren Mitgliedschaufelreihe (i+1) in Hauptströmungsrichtung wenigstens teilweise vor einem hinteren Haltefinger HF(i) der vorderen Mitgliedschaufelreihe (i) angeordnet ist. Es kann ebenfalls vorgesehen sein, dass ein vorderer Haltefinger VF(i+1) der hinteren Mitgliedschaufelreihe (i+1) quer zur Hauptströmungsrichtung weiter entfernt vom Hauptströmungspfad als ein hinterer Haltefinger HF(i) der vorderen Mitgliedschaufelreihe (i) angeordnet ist.

Für eine detaillierte Betrachtung der erfindungsgemäßen Geometrie zeigt die Fig. 2a einen Schnitt A-A, mit dessen Hilfe im Weiteren die Schaufelanordnung genauer beschrieben werden kann. Der Schnitt A-A verläuft entlang einer Meridionalstromlinie in einem kleinen Abstand von der äußeren Hauptströmungspfadberandung HB.

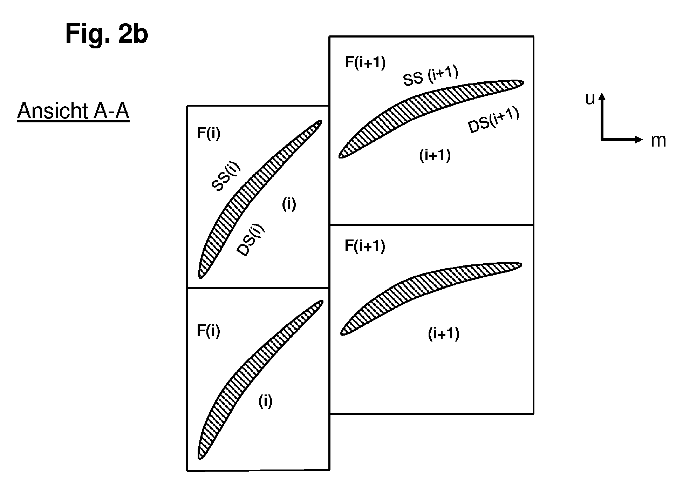

Die Fig. 2b zeigt die erfindungsgemäße Statorschaufelreihenanordnung im Schnitt A-A aus der Fig. 2a, folglich in einer durch die Meridionalkoordinate m und die Umfangskoordinate u gebildeten Ebene. Die Basis F(i), F(i+1) der Schaufeln wird in der hier gewählten Darstellung durch einzelne Schaufelfüße gebildet. Die im Wesentlichen konvexen Saugseiten der Schaufeln der Reihen (i) und (i+1) sind mit SS und die im Wesentlichen konkaven Druckseiten mit DS gekennzeichnet.

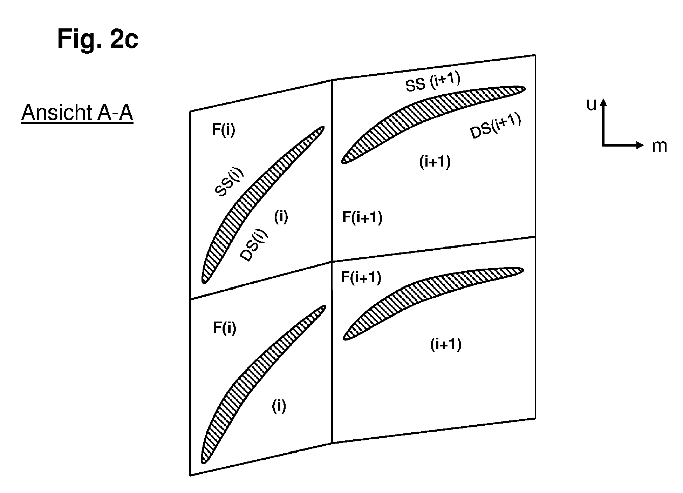

Auch in Fig. 2c wird die Basis F(i), F(i+1) der Schaufeln beiden Reihen (i) und (i+1) durch einzelne Schaufelfüße gebildet, wobei hier die Basen F(i), F(i+1) der Schaufelreihen (i) und (i+1) einen parallelogrammartigen Grundriss aufweisen. Dabei ist es günstig, wenn die vorderen Ecken der Basis der hinteren Reihe (i+1) unmittelbar an den hinteren Ecken der Basis der vorderen Reihe (i) angrenzen. Die seitlichen Kanten der Basen F(i), F(i+1) der Reihen (i) und (i+1) bilden dabei einen geraden oder alternativ abgewinkelten Linienzug. Im Fall einer abgewinkelten Linienzuges ist es vorteilhaft, wenn der zwischen den seitlichen Kanten und der Axialrichtung eingeschlossenen Winkel an der hinteren Reihe (i+1) kleiner ist als auf der vorderen Reihe (i).

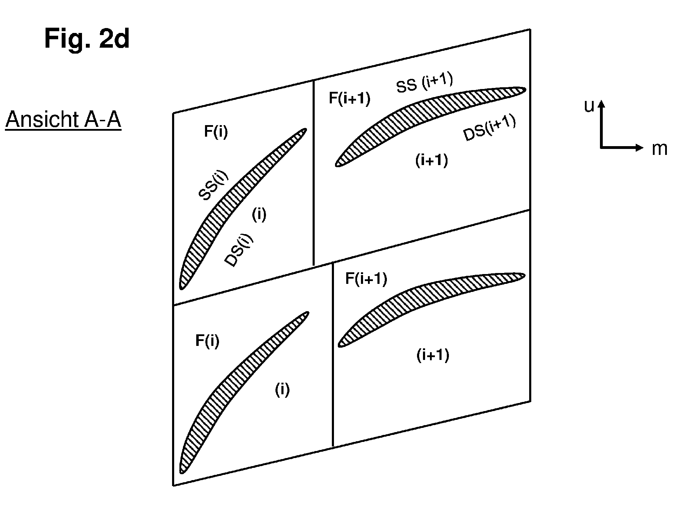

Die Fig. 2d zeigt eine erfindungsgemäße Anordnung, bei der die Basis F(i), F(i+1) der Schaufeln beider Reihen (i) und (i+1) durch einzelne Schaufelfüße gebildet ist, wobei hier die Basen F(i), F(i+1) der Schaufelreihen (i) und (i+1) einen parallelogrammartigen Grundriss aufweisen und die seitlichen Kanten der Basen der Reihen (i) und (i+1) parallel verlaufen. Es ist günstig, wenn jeweils eine seitliche Kante der vorderen Reihe (i) gemeinsam mit einer seitlichen Kante der hinteren Reihe (i+1) eine gerade Linie bildet. Es kann weiterhin von Vorteil sein, wenn die hauptströmungsabgewandten Kanten der Basen F(i) der vorderen Reihe (i) gemeinsam mit den hauptströmungszugewandten Kanten der Basen der hinteren Reihe (i+1) jeweils in Umfangsrichtung konstant, aber von Schaufel zu Schaufel alternierend axial versetzt vorgesehen sind, um eine feste relative Position zwischen den Schaufeln der vorderen Reihe (i) und der hinteren Reihe (i+1) sicherzustellen. Es ist dabei günstig, wenn jede weite Schaufel einer Reihe (i) bzw. (i+1) dieselbe Schaufelfußgeometrie besitzt.

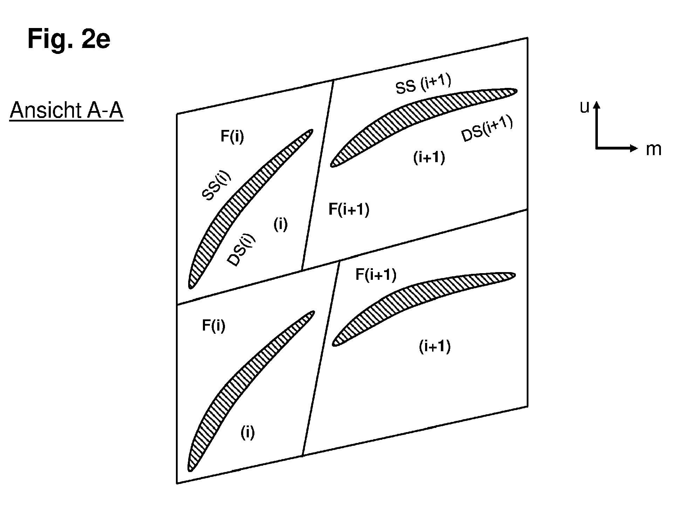

Die Fig. 2e zeigt eine erfindungsgemäße Anordnung, bei der die hauptströmungsabgewandten Kanten der Basen der vorderen Reihe (i) gemeinsam mit den hauptströmungszugewandten Kanten der Basen der hinteren Reihe (i+1) jeweils schräg gegenüber der Umfangsrichtung verlaufen, um eine feste relative Position zwischen den Schaufeln der Reihe (i) und der Reihe (i+1) sicherzustellen. Es ist dabei günstig, wenn jede weite Schaufel einer Reihe (i) bzw. (i+1) dieselbe Schaufelfußgeometrie besitzt.

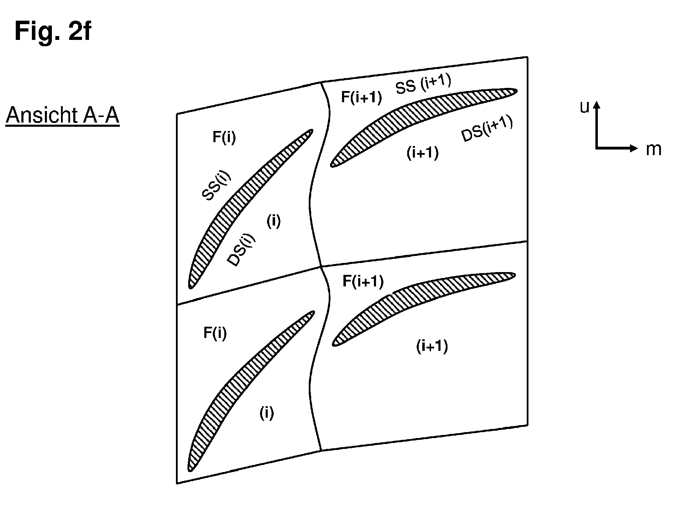

Die Fig. 2f zeigt eine erfindungsgemäße Anordnung, bei der die hauptströmungsabgewandten Kanten der Basen der vorderen Reihe (i) gemeinsam mit den hauptströmungszugewandten Kanten der Basen der hinteren Reihe (i+1) jeweils konturiert und mit variierender Axialposition in Umfangsrichtung verlaufen, um eine feste relative Position zwischen den Schaufeln der Reihe (i) und der Reihe (i+1) sicherzustellen. Besonders vorteilhaft ist ein geschwungener Verlauf. Es ist dabei günstig, wenn jede Schaufel einer Reihe (i) bzw. (i+1) dieselbe Schaufelfußgeometrie besitzt.

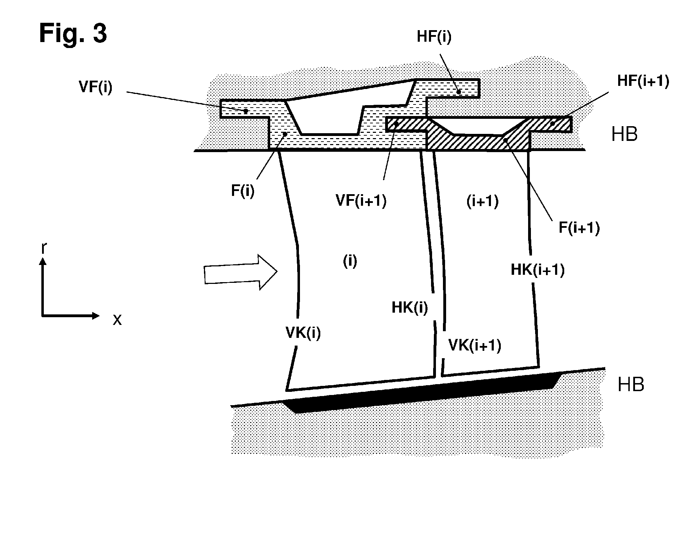

Die Fig. 3 zeigt, ähnlich wie die Fig. 2a, in der durch die Axialrichtung x und die Radialrichtung r gebildeten Meridionalebene eine erfindungsgemäße Statorschaufelreihengruppe bestehend aus zwei direkt benachbarten feststehenden Statorschaufelreihen (i) und (i+1).

Hier ist der Fall gezeigt, dass ein vorderer Haltefinger VF(i+1) der hinteren Mitgliedschaufelreihe (i+1) in der Schaufelfußkonstruktion der vorderen Mitgliedschaufelreihe (i) verankert ist. Dabei kann vorgesehen sein, dass ein hinterer Haltefinger HF(i) der vorderen Mitgliedschaufelreihe (i) in Hauptströmungsrichtung wenigstens teilweise hinter einem vorderen Haltefinger VF(i+1) der hinteren Mitgliedschaufelreihe (i+1) vorgesehen ist.

Es kann ebenfalls vorgesehen sein, dass ein hinterer Haltefinger HF(i) der vorderen Mitgliedschaufelreihe (i) quer zur Hauptströmungsrichtung (in radialer Richtung) weiter entfernt vom Hauptströmungspfad als ein vorderer Haltefinger VF(i+1) der hinteren Mitgliedschaufelreihe (i+1) vorgesehen ist.

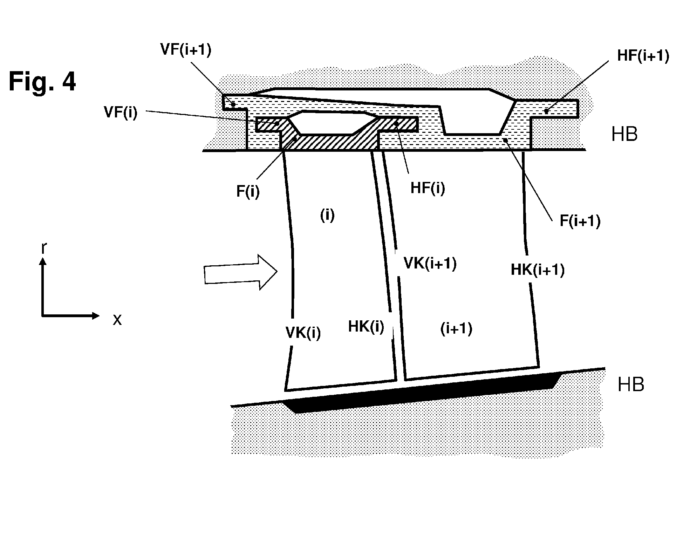

Die Fig. 4 zeigt, ähnlich wie die Fig. 2a, in der durch die Axialrichtung x und die Radialrichtung r gebildeten Meridionalebene eine erfindungsgemäße Statorschaufelreihengruppe bestehend aus zwei direkt benachbarten feststehenden Statorschaufelreihen (i) und (i+1).

In der Fig. 4 ist der Fall gezeigt, dass beide Haltefinger VF(i) und HF(i) der vorderen Mitgliedschaufelreihe (i) in der Schaufelfußkonstruktion F(i+1) der hinteren Mitgliedschaufelreihe (i+1) verankert vorgesehen sind. Dabei kann es günstig sein, wenn ein vorderer Haltefinger VF(i+1) der hinteren Mitgliedschaufelreihe (i+1) in Hauptströmung wenigstens teilweise stromaufwärts eines vorderen Haltefingers VF(i) der vorderen Mitgliedschaufelreihe (i) vorgesehen ist. Es weiter von Vorteil sein, wenn ein vorderer Haltefinger VF(i+1) der hinteren Mitgliedschaufelreihe (i+1) quer zur Hauptströmungsrichtung weiter entfernt vom Hauptströmungspfad als ein vorderer Haltefinger VF(i) der vorderen Mitgliedschaufelreihe (i) vorgesehen ist.

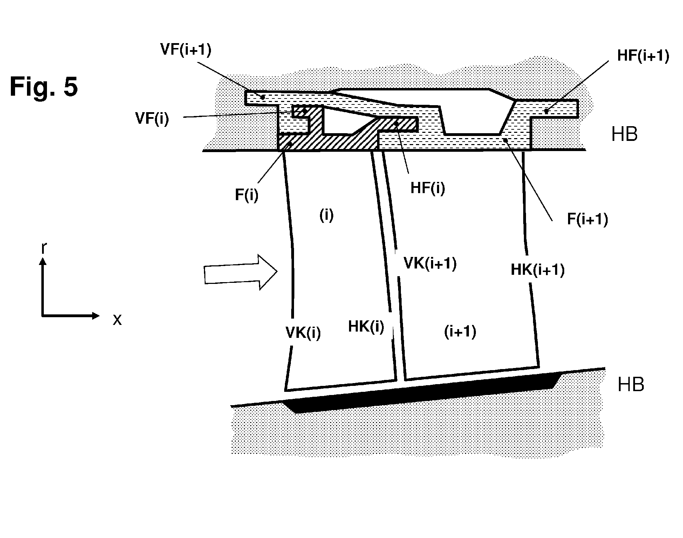

Die Fig. 5 zeigt, ähnlich wie die Fig. 4, eine erfindungsgemäße Statorschaufelreihengruppe. Hier ist der Fall gezeigt, dass der vordere Haltefinger VF(i) der vorderen Mitgliedschaufelreihe (i) nicht direkt am vorderen Rand, sondern stromabwärts entfernt vom vorderen Rand der Basis F(i) der Reihe (i) vorgesehen ist.

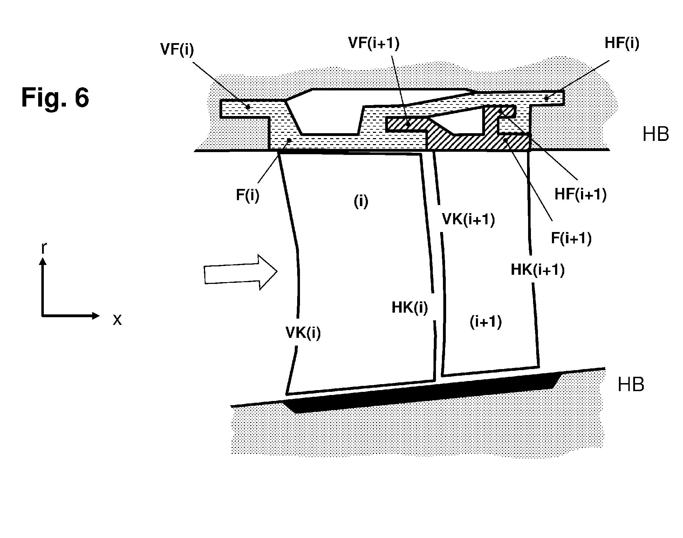

Die Fig. 6 zeigt, ähnlich wie die Fig. 5, eine erfindungsgemäße Statorschaufelreihengruppe. Hier ist der Fall gezeigt, dass beide Haltefinger VF(i+1) und HF(i+1) der hinteren Mitgliedschaufelreihe (i+1) in der Schaufelfußkonstruktion F(i) der vorderen Mitgliedschaufelreihe (i) verankert vorgesehen sind.

Dabei kann vorgesehen sein, dass ein hinterer Haltefinger HF(i) der vorderen Mitgliedschaufelreihe (i) in Hauptströmung wenigstens teilweise stromabwärts eines hinteren Haltefingers HF(i+1) der hinteren Mitgliedschaufelreihe (i+1) vorgesehen ist. Es weiter von Vorteil sein, wenn ein hinterer Haltefinger HF(i) der vorderen Mitgliedschaufelreihe (i) quer zur Hauptströmungsrichtung weiter entfernt vom Hauptströmungspfad als ein hinterer Haltefinger HF(i+1) der hinteren Mitgliedschaufelreihe (i+1) vorgesehen ist.

Auch kann vorgesehen sein, dass der hintere Haltefinger HF(i+1) der hinteren Mitgliedschaufelreihe (i+1) nicht direkt am hinteren Rand, sondern stromaufwärts entfernt vom hinteren Rand der Basis F(i+1) der hinteren Schaufelreihe (i+1) vorgesehen ist.

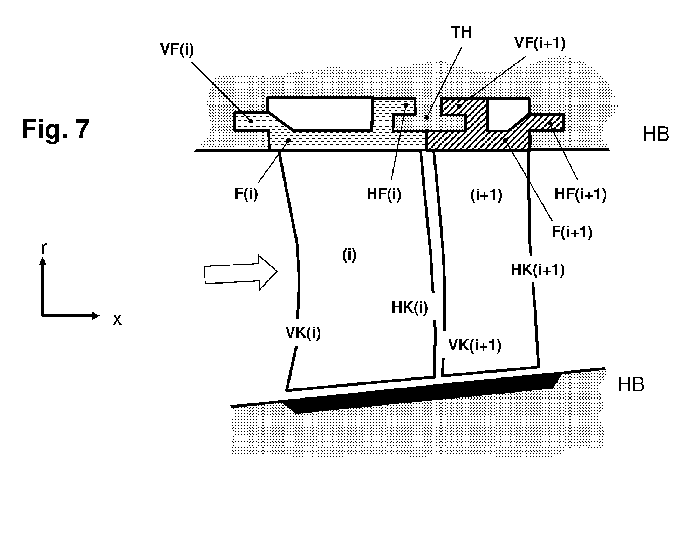

Die Fig. 7 zeigt eine erfindungsgemäße Statorschaufelreihengruppe, bei der die vordere Mitgliedschaufelreihe (i) und die hintere Mitgliedschaufelreihe (i+1) separat in der umgebenden Struktur verankert vorgesehen sind, wobei keiner der beiden jeweils zugehörigen Haltefinger VF(i) und HF(i) beziehungsweise VF(i+1) und HF(i+1) in der Schaufelfußkonstruktion F(i), F(i+1) der jeweils anderen Mitgliedschaufelreihe verankert ist.

Dabei kann vorgesehen sein, dass in der umgebenden Struktur im Bereich der Haltefinger HF(i) und VF(i+1) eine im Wesentlichen oder exakt T-förmige Halterung TH ausgeprägt ist, die sich zwischen den aufeinander zeigenden Haltefinger HF(i), VF(i+1) erstreckt und diese über einen Formschluss räumlich fixiert.

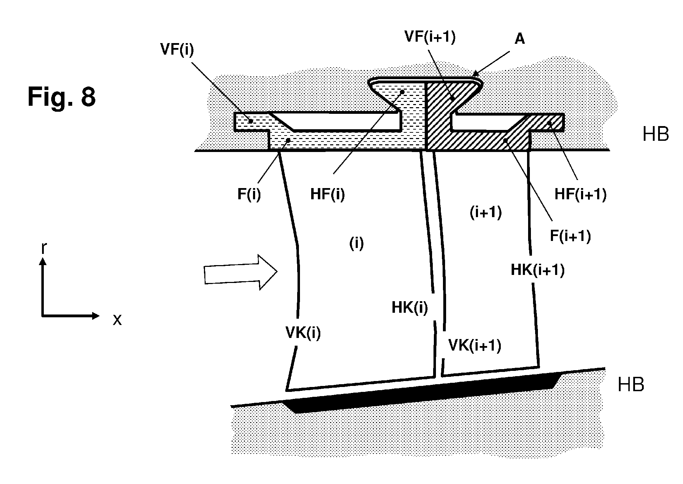

Die Fig. 8 zeigt eine weitere erfindungsgemäße Statorschaufelreihengruppe. Bei diesem Ausführungsbeispiel sind der hintere Haltefinger HF(i) der vorderen Mitgliedschaufelreihe (i) und der vordere Haltefinger VF(i+1) der hinteren Mitgliedschaufelreihe (i+1) gemeinsam in einer Ausnehmung A in der umgebenden Struktur verankert, wobei die Haltefinger HF(i) und VF(i+1) voneinander weg weisen.

Es kann dabei vorgesehen sein, dass dabei die Schaufelfußkonstruktionen F(i), F(i+1) der beiden Mitgliedschaufelreihe (i) und (i+1) in wenigstens einer Meridionalebene (r, x) entlang einer quer oder schräg zur Hauptströmungsrichtung orientierten Linie Rücken an Rücken aneinander liegen und sich auf diese Weise gegen einander abstützen. Dabei kann es vorgesehen sein, wenn die für die Haltefinger HF(i) und VF(i+1) gemeinsam vorgesehene Ausnehmung A eine im Wesentlichen oder exakt schwalbenschwanzförmige Form besitzt, die mit der Form der Haltefinger HF(i), VF(i+1) korrespondiert.

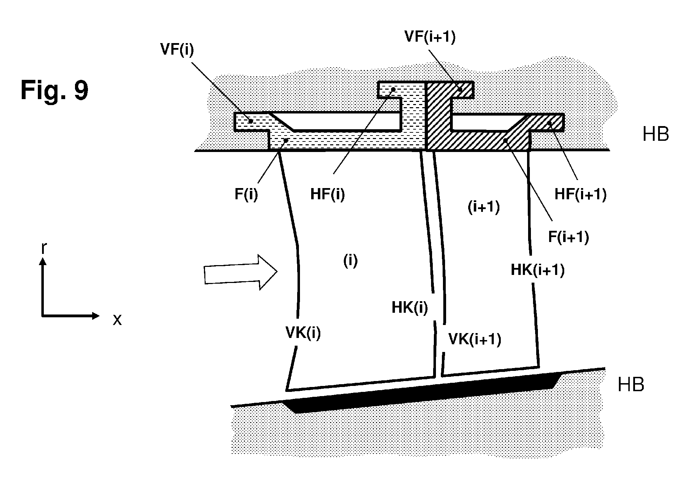

Wie die Fig. 9 zeigt, kann alternativ vorgesehen sein, wenn die für die Haltefinger HF(i) und VF(i+1) gemeinsam vorgesehene Ausnehmung eine im Wesentlichen oder exakt T-förmige Form besitzt.

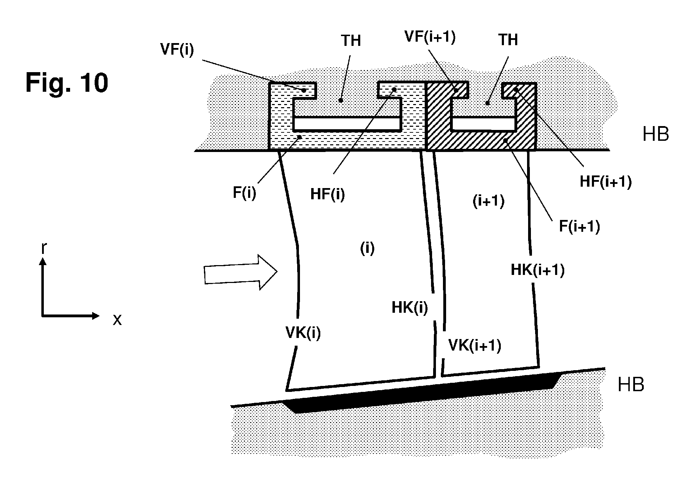

Die Fig.10 zeigt eine erfindungsgemäße Statorschaufelreihengruppe, bei der wenigstens bei einer der beiden Schaufelfußkonstruktionen F(i), F(i+1) der beiden Mitgliedschaufelreihen (i) und (i+1) die beiden einer Schaufelfußkonstruktion F(i), F(i+1) zugehörigen Haltefinger VF(i), HF(i) und VF(i+1), HF(i+1) aufeinander zu weisen.

Es kann dabei vorteilhaft sein, wenn bei beiden Schaufelfußkonstruktionen F(i), F(i+1) die beiden jeweils zugehörigen Haltefinger aufeinander zu weisen. Dabei kann vorgesehen sein, dass in der umgebenden Struktur jeweils im Bereich zwischen den Haltefingern VF(i) und HF(i) bzw. VF(i+1) und HF(i+1) eine im Wesentlichen oder exakt T-förmige Halterung TH ausgeprägt ist, um die Haltefinger und damit die Schaufelfußkonstruktionen F(i), F(i+1) räumlich in der umgebenden Struktur zu fixieren.

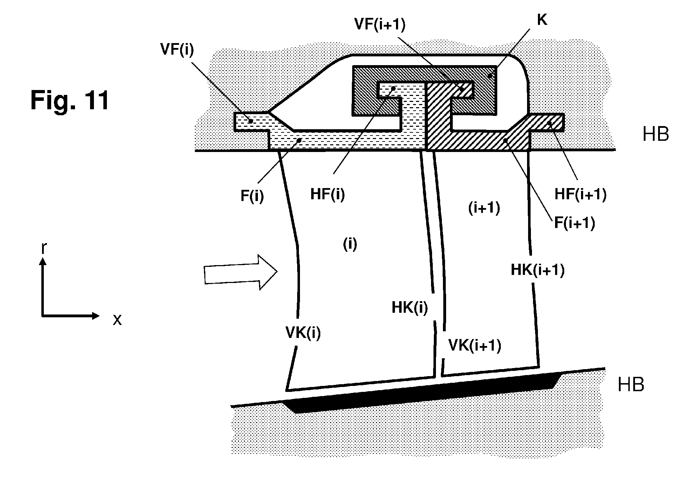

Die Fig. 11 zeigt, ähnlich wie die Fig. 8 und die Fig. 9, eine erfindungsgemäße Statorschaufelreihengruppe, bei der die Schaufelfußkonstruktionen F(i), F(i+1) der beiden Mitgliedschaufelreihe (i) und (i+1) in wenigstens einer Meridionalebene (r, x) entlang einer quer oder schräg zur Hauptströmungsrichtung orientierten Linie Rücken an Rücken aneinander liegen und sich auf diese Weise gegen einander abstützen.

Dabei werden der hintere Haltefinger HF(i) der vorderen Mitgliedschaufelreihe (i) und der vordere Haltefinger VF(i+1) der hinteren Mitgliedschaufelreihe (i+1) gemeinsam in einem separaten Klammerbauteil K zusammengehalten. Das Klammerbauteil K kann erfindungsgemäß als Teil- oder Vollring ausgeprägt sein. In der umgebenden Struktur ist im Bereich der Haltefinger HF(i) und VF(i+1) eine Kavität vorgesehen, die das Klammerbauteil beherbergt.

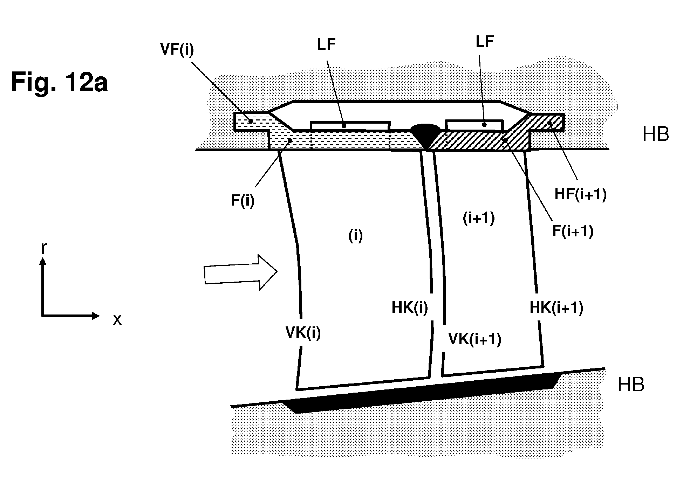

Die Fig. 12a zeigt eine erfindungsgemäße Statorschaufelreihengruppe, bei der die Schaufelfußkonstruktionen F(i), F(i+1) der Mitgliedschaufelreihen (i) und (i+1) durch eine Schweiß- oder Löttechnik miteinander verbunden sind, wobei Haltefinger entsprechend den Haltefingern HF(i) und VF(i+1) der vorangehenden Figuren nicht vorgesehen sind. Jeder der Schaufelfußkonstruktionen F(i), F(i+1) besitzt somit eine Haltestruktur VF(i), HF(i+1). Auf diese Weise ergibt sich eine gemeinsame Fußkonstruktion für beide Mitgliedschaufelreihen.

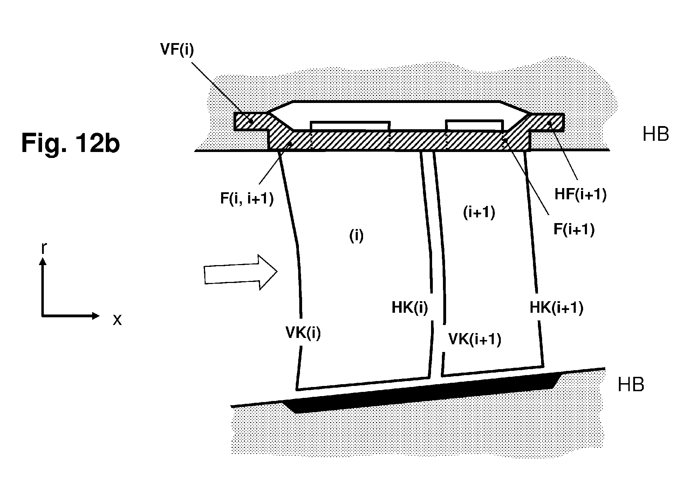

Am Beispiel der Statorschaufelreihengruppe in Fig. 12b, aber gültig für jede andere im Voranstehenden dargestellte Schaufelfußkonstruktion, ist eine weitere erfindungsgemäße Lösung gezeigt, die vorsieht, dass wenigstens an einer der beiden Mitgliedschaufelreihen die Schaufelprofile (i), (i+1) separat von der Schaufelfußkonstruktion F(i, i+1) angefertigt sind und mit Hilfe von laschenartigen Fortsätzen LF, die im Wesentlichen als Verlängerung des Profils über die Hauptströmungspfadberandungen HB hinaus ausgebildet sind, an der Schaufelfußkonstruktion F(i, i+1) befestigt sind. Dabei kann vorgesehen sein, dass die laschenartigen Fortsätzen LF in die Schaufelfußkonstruktion F(i, i+1) z.B. durch Schlitze oder Aussparungen in der Schaufelfußkonstruktion F(i, i+1) im Bereich der Hauptströmungspfadberandung HB hinein reichen und in dieser fixiert sind. Gegebenenfalls stellt ein Fügeprozess den Formschluss zwischen Laschen und Schaufelfußkonstruktion F(i, i+1) her. In der Fig. 12b bilden die beiden Schaufelfußkonstruktionen der vorderen und hinteren Mitgliedschaufelreihe eine einheitliche Schaufelfußkonstruktion F(i, i+1). Alternativ können die Schaufelfußkonstruktionen wie anhand der voranstehenden Ausführungsbeispiele erläutert jedoch auch als gesonderte Strukturen ausgebildet sein.

Die Fig. 12b zeigt eine erfindungsgemäße Statorschaufelreihengruppe, bei der die Schaufelfußkonstruktionen der Mitgliedschaufelreihen (i) und (i+1) bauteilbezogen vereinigt sind, sodass die Schaufelprofile der Reihen (i) und (i+1) gemeinsam auf derselben Basis und gemeinsam an derselben Schaufelfußkonstruktion F(i, i+1) befestigt vorgesehen sind.

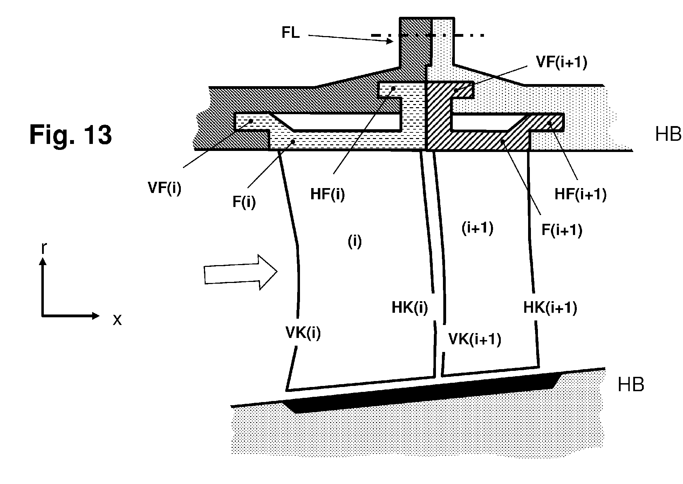

Die Fig. 13 zeigt, ähnlich wie die Fig. 9, eine erfindungsgemäße Statorschaufelreihengruppe, bei der die Schaufelfußkonstruktionen F(i), F(i+1) der beiden Mitgliedschaufelreihen (i) und (i+1) in wenigstens einer Meridionalebene (r, x) entlang einer quer oder schräg zur Hauptströmungsrichtung orientierten Linie Rücken an Rücken aneinander liegen und sich auf diese Weise gegen einander abstützen.

Dabei kann es konstruktiv günstig sein, wenn die umgebende Struktur in der Nähe der Schaufelfußkonstruktionen F(i), F(i+1) der beiden Mitgliedschaufelreihen (i) und (i+1) einen Flansch FL ausbildet. Dabei kann vorgesehen sein, dass die Flanschfläche bezüglich der Hauptströmungsrichtung innerhalb des von einem der Haltefingern HF(i) oder VF(i+1) eingenommenen Bereichs liegt. In einem besonderen Fall ist eine fluchtende Positionierung der Flanschfläche und der Kontaktfläche zwischen den Schaufelfußkonstruktionen (i) und (i+1) von weiterem Vorteil.

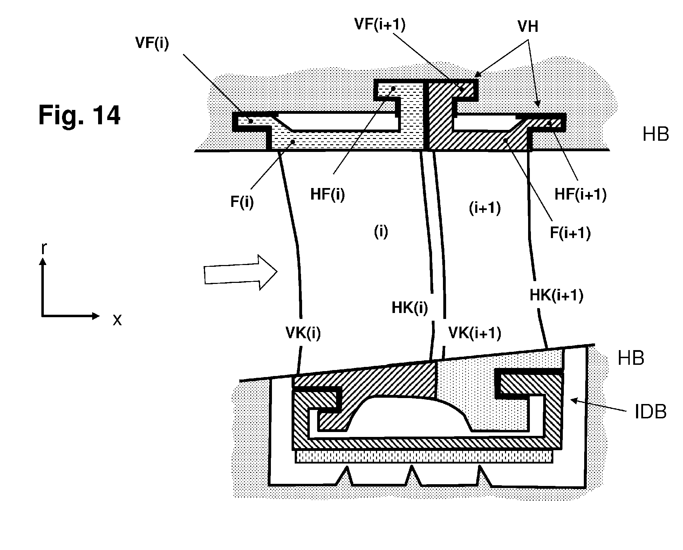

Die Fig. 14 zeigt eine ähnliche erfindungsgemäße Statorschaufelreihengruppe wie die Fig. 9, hier jedoch nicht mit einem freien radial inneren Schaufelende, sondern mit einem mit Innendeckband IDB versehenen inneren Schaufelende. Erfindungsgemäß kann auch jede andere im Vorangegangenen beschriebene Schaufelreihengruppe ein Innendeckband aufweisen. Dies ist der Einfachheit halber aber nicht für jede Konfiguration bildlich dargestellt.

Wie die Fig. 14 weiterhin zeigt, kann erfindungsgemäß vorgesehen sein, dass zwischen verschiedenen Bauteilen, beispielsweise einer Schaufelfußkonstruktion F(i), F(i+1) und der umgebenden Struktur Verschleißschutzhülsen VH (oder allgemein ein Schutzbelag) eingesetzt werden, die von dünner Wandstärke sind und den Aufbau der Konstruktion nicht konzeptionell verändern. Solche Verschleißschutzhülsen VH dienen beispielsweise einem Reibschutz. Der Begriff des Aneinandergrenzens oder Berührens einer Schaufelfußkonstruktion und der umgebenden Struktur wie im Voranstehenden beschrieben soll folglich auch für den Umstand des Aneinandergrenzen bzw. Berührens über eine zwischenliegende Verschleißschutzhülse bzw. einen zwischenliegenden Schutzbelag gelten.

Die vorliegende Erfindung beschränkt sich in ihrer Ausgestaltung nicht auf die dargestellten Ausführungsbeispiele. So können die Prinzipien der vorliegenden Erfindung beispielsweise in entsprechender Weise auf Rotor-Schaufelreihen und die Fixierung von Schaufelenden von Rotorschaufeln angewandt werden.

## Patentansprüche

1. Schaufelreihengruppe anordbar in einem Hauptströmungspfad einer Strömungsmaschine und bestehend aus N benachbarten und sowohl in Axialrichtung (x) als auch in Umfangsrichtung relativ zueinander fest angeordneten Mitgliedsschaufelreihen, wobei die Anzahl N der Mitgliedsschaufelreihen größer gleich 2 ist und (i) den Laufindex mit Werten zwischen 1 und N kennzeichnet, wobei in der durch die Axialrichtung (x) und die Radialrichtung (r) gebildeten Meridionalebene eine vordere Mitgliedsschaufelreihe mit vorderen Schaufeln (i) sowie eine hintere Mitgliedsschaufelreihe mit hinteren Schaufeln (i+1) gegeben sind, wobei die Schaufelreihengruppe zwei Hauptströmungspfadberandungen (HB) aufweist,
**dadurch gekennzeichnet,**
**dass** das Schaufelprofil der Schaufeln (i, i+1) der Mitgliedsschaufelreihen an wenigstens einer der beiden Hauptströmungspfadberandungen (HB) fest mit einer Schaufelfußkonstruktion (F(i), F(i+1)) verbunden ist, wobei die Schaufelfußkonstruktion (F(i)) der Schaufeln (i) der vorderen Mitgliedschaufelreihe mindestens eine Haltestruktur (VF(i), HF(i)) und/oder die Schaufelfußkonstruktion (F(i+1)) der Schaufeln (i+1) der hinteren Mitgliedschaufelreihe mindestens eine Haltestruktur (VF(i+1), HF(i+1)) aufweist und mindestens eine der Haltestrukturen (VF(i), HF(i), VF(i+1), HF(i+1)) dazu ausgebildet und geeignet ist, aufgrund ihrer Formgebung die jeweilige Schaufelfußkonstruktion (F(i), F(i+1)) der Mitgliedschaufelreihe in wenigstens einer Richtung innerhalb der umgebenden Struktur der betreffenden Hauptströmungspfadberandung zu fixieren.

2. Schaufelreihenbaugruppe nach Anspruch 1, **dadurch gekennzeichnet, dass** die Schaufelfußkonstruktion (F(i), F(i+1)) der Schaufeln (i, i+1) einzelne Schaufelfüße aufweist, die eine Basis der Schaufeln (i, i+1) bilden, und die Basen der Mitgliedschaufelreihen einen unterschiedlichen parallelogrammartigen Grundriss aufweisen.

3. Schaufelreihenbaugruppe nach Anspruch 1 oder 2, **dadurch gekennzeichnet, dass** wenigstens eine der Schaufelfußkonstruktionen (F(i), F(i+1)) der Mitgliedschaufelreihen zwei Haltestrukturen, eine vordere Haltestruktur (VF(i), VF(i+1)) und eine hintere Haltestruktur (HF(i), HF(i+1)) umfasst, die gemeinsam für einen festen Sitz der Mitgliedschaufelreihe (i) bzw. (i+1) in der umgebenden Struktur und/oder eine Verbindung der Schaufelfußkonstruktionen (F(i), F(i+1)) untereinander sorgen.

4. Schaufelreihenbaugruppe nach Anspruch 3, **dadurch gekennzeichnet, dass** die vordere Haltestruktur (VF(i), VF(i+1)) sich entgegen der Axialrichtung (x) und die hintere Haltestruktur (HF(i), HF(i+1)) sich in Axialrichtung (x) erstreckt.

5. Schaufelreihenbaugruppe nach Anspruch 3 oder 4, **dadurch gekennzeichnet, dass** die hintere Haltestruktur (HF(i)) der vorderen Mitgliedschaufelreihe in der Schaufelfußkonstruktion der hinteren Mitgliedschaufelreihe verankert ist und/oder die vordere Haltestruktur (VF(i+1)) der hinteren Mitgliedschaufelreihe in der Schaufelfußkonstruktion der vorderen Mitgliedschaufelreihe (i) verankert ist.

6. Schaufelreihenbaugruppe nach einem der Ansprüche 3 bis 5, **dadurch gekennzeichnet, dass** beide Haltestrukturen (VF(i), HF(i)) der vorderen Mitgliedschaufelreihe in der Schaufelfußkonstruktion (F(i+1)) der hinteren Mitgliedschaufelreihe (i+1) verankert sind und/oder beide Haltestrukturen (VF(i+1), HF(i+1)) der hinteren Mitgliedschaufelreihe in der Schaufelfußkonstruktion (F(i)) der vorderen Mitgliedschaufelreihe verankert sind.

7. Schaufelreihenbaugruppe nach einem der vorangehenden Ansprüche, **dadurch gekennzeichnet, dass** die Schaufeln (i, i+1) der Mitgliedschaufelreihen separat in der umgebenden Struktur verankert sind, wobei keine der Haltestrukturen (VF(i), HF(i), VF(i+1), HF(i+1)) einer Mitgliedschaufelreihe in einer Schaufelfußkonstruktion (F(i), F(i+1)) der jeweils anderen Mitgliedschaufelreihe verankert ist.

8. Schaufelreihenbaugruppe nach einem der vorangehenden Ansprüche, **dadurch gekennzeichnet, dass** eine hintere Haltestruktur (HF(i)) der vorderen Mitgliedschaufelreihe und eine vordere Haltestruktur (VF(i+1)) der hinteren Mitgliedschaufelreihe gemeinsam in einer Ausnehmung in der umgebenden Struktur verankert sind, wobei die beiden Haltestrukturen (HF(i), VF(i+1)) voneinander weg weisen.

9. Schaufelreihenbaugruppe nach einem der vorangehenden Ansprüche, **dadurch gekennzeichnet, dass** eine hintere Haltestruktur (HF(i)) der vorderen Mitgliedschaufelreihe und eine vordere Haltestruktur (VF(i+1)) der hinteren Mitgliedschaufelreihe gemeinsam von einem separaten Klammerbauteil (K) zusammengehalten sind, wobei das Klammerbauteil (K) als Teil- oder Vollring ausgeprägt ist.

10. Schaufelreihenbaugruppe nach einem der vorangehenden Ansprüche, **dadurch gekennzeichnet, dass** die jeweiligen Schaufelfußkonstruktionen der Mitgliedschaufelreihen durch eine Schweiß- oder Löttechnik miteinander verbunden sind, wodurch eine kombinierte Schaufelfußkonstruktion F(l, i+1) für Schaufeln (i, i+1) beider Mitgliedschaufelreihen gegeben ist.

11. Schaufelreihenbaugruppe nach einem der vorangehenden Ansprüche, **dadurch gekennzeichnet, dass** die jeweiligen Schaufelfußkonstruktionen (F(i), F(i+1)) der Mitgliedschaufelreihen bauteilbezogen vereinigt sind, sodass die Schaufelprofile zweier Schaufeln (i, i+1) der vorderen und der hinteren Mitgliedschaufelreihe gemeinsam auf derselben Basis und gemeinsam an derselben Schaufelfußkonstruktion befestigt sind.

12. Schaufelreihenbaugruppe nach einem der vorangehenden Ansprüche, **dadurch gekennzeichnet, dass** wenigstens an einer der beiden Mitgliedschaufelreihen die Schaufelprofile der jeweiligen Schaufeln (i, i+1) separat von der Schaufelfußkonstruktion angefertigt sind und mit Hilfe von laschenartigen Fortsätzen (LF), die im Wesentlichen als Verlängerung des Profils über die Hauptströmungspfadberandungen (HB) hinaus und in die Schaufelfußkonstruktion hinein reichen, an der Schaufelfußkonstruktion (F(i), F(i+1)) befestigt sind.

13. Schaufelreihenbaugruppe nach einem der vorangehenden Ansprüche, **dadurch gekennzeichnet, dass** in der umgebenden Struktur in der Nähe der Schaufelfußkonstruktionen (F(i), F(i+1)) der beiden Mitgliedschaufelreihen ein Flansch (FL) vorgesehen ist, der die räumliche Position mindestens einer Haltestruktur (VF(i), HF(i), VF(i+1), HF(i+1)) in der umgebenden Struktur absichert.

14. Schaufelreihengruppe nach einem der vorangehenden Ansprüche, **dadurch gekennzeichnet, dass** die Haltestruktur (VF(i), HF(i), VF(i+1), HF(i+1)) einer Schaufelfußkonstruktion (F(i), F(i+1)) zumindest im Meridionalebenenschnitt eine längliche Form aufweist, insbesondere durch einen Haltefinger gebildet ist.

15. Schaufelreihengruppe nach einem der vorangehenden Ansprüche, **dadurch gekennzeichnet, dass** die benachbarten und sowohl in Axialrichtung (x) als auch in Umfangsrichtung relativ zueinander fest angeordneten Mitgliedsschaufelreihen der Schaufelreihengruppe Bestandteile genau einer Verdichterstufe oder genau einer Turbinenstufe sind.
